# Europäisches Patentamt
## European Patent Office
## Office européen des brevets

(11) Veröffentlichungsnummer : **0 326 866 B1**

(12)     ## EUROPÄISCHE PATENTSCHRIFT

(45) Veröffentlichungstag der Patentschrift :
02.01.92 Patentblatt 92/01

(51) Int. Cl.⁵ : **C09B 1/00, C07C 235/70**

(21) Anmeldenummer : **89100910.2**

(22) Anmeldetag : **20.01.89**

(54) **Verfahren zur Herstellung von Acylaminen der Anthrachinonreihe.**

(30) Priorität : **29.01.88 DE 3802613**

(43) Veröffentlichungstag der Anmeldung :
**09.08.89 Patentblatt 89/32**

(45) Bekanntmachung des Hinweises auf die
Patenterteilung :
**02.01.92 Patentblatt 92/01**

(84) Benannte Vertragsstaaten :
**CH DE GB LI**

(56) Entgegenhaltungen :
**FR-A- 1 117 697**
**FR-A- 2 212 402**

(73) Patentinhaber : **BASF Aktiengesellschaft**
**Carl-Bosch-Strasse 38**
**W-6700 Ludwigshafen (DE)**

(72) Erfinder : **Hoch, Helmut, Dr.**
**Am Wingertsberg 14**
**W-6719 Weisenheim (DE)**
Erfinder : **Kilpper, Gerhard, Dr.**
**Am Tannenhang 1**
**W-6719 Carlsberg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Acylamine von Anthrachinonverbindungen sind wichtige Vorprodukte von Farbstoffen, z.B. ist das durch Kondensation aus 1-Amino-anthrachinon-2-carbonsäure mit 2-Amino-3-bromanthrachinon erhaltene Acylamin Ausgangsprodukt zur Herstellung von C.I. Vat Red 10 ; C. I Nr. 67000 (DE-C 2259329) ; das Kondensationsprodukt aus 1-Amino-4-nitro-anthrachinon-2-carbonsäure mit 2-Amino-3-bromanthrachinon ist Vorprodukt zur Synthese von C.I. Vat Blue 31 ; C.I. Nr. 67105.

Die Herstellung dieser Acylamine — im Folgenden als Acylamine bezeichnet — erfolgt ganz allgemein durch Umsetzen der substituierten Anthrachinoncarbonsäuren mit Aminoverbindungen des Anthrachinons. Hierbei wird zunächst die Carbonsäure in einem Lösungsmittel, z.B. mit Thionylchlorid, in das entsprechende Säurehalogenid überführt, das dann in einer weiteren Stufe mit der Aminoverbindung kondensiert wird.

In der DE-C 475687, Beispiel 9 wird z.B. die Acylierung von 2-Amino-3-oxianthrachinon mit 1-Amino-anthrachinon-2-carbonsäure beschrieben. Die Reaktion erfolgt in Nitrobenzol als Lösungsmittel. Ausbeuten sind nicht angegeben, ebenso fehlen Angaben über die Reinheit. Bei der folgenden Ringschlußreaktion des Acylamins in Schwefelsäure zu C.I. Vat Red 10 werden ebenfalls keine Angaben über Ausbeuten und Reinheit des Farbstoffs gemacht.

Weiterhin wird in FIAT, Vol. II, Nr. 13/3, Seite 158 die Umsetzung von 1-Nitro-anthrachinon-2-carbonsäure mit 2-Amino-3-oxi-anthrachinon beschrieben, wobei o-Dichlorbenzol als Lösungsmittel dient. Die Ausbeute wird mit 82,7% d. Th. angegeben, wobei die Reinheit 80% betragen soll. Die weitere Umsetzung des Kondensationsproduktes mit Schwefelsäure zum Oxazolderivat und der Austausch der Nitrogruppe im Oxazolderivat mit Ammoniak zum C.I. Vat Red 10 werden ebenfalls beschrieben.

Diese und ähnliche Verfahren haben aus ökologischer und arbeitshygienischer Sicht große Nachteile. Sie erfordern entweder den Umgang mit halogenaromatischen Kohlenwasserstoffen wie Dichlorbenzol, die biologisch sehr schwer abgebaut werden, oder verwenden das zwar biologisch besser abbaubare Nitrobenzol, das jedoch eine hohe Toxizität aufweist. Letzteres hat außerdem noch den Nachteil, daß die Umsetzungsprodukte in deutlich schlechterer Ausbeute und Reinheit erhalten werden.

Aufgabe der Erfindung war es, ein für die Acylierungsreaktion geeignetes Reaktionsmedium bereitzustellen, daß die Nachteile der bekannten und bisher als Reaktionsmedien verwendeten organischen Flüssigkeiten nicht aufweist.

Es wurde nun gefunden, daß man Acylamine der Anthrachinonreihe durch Umsetzen von substituierten Anthrachinoncarbonsäurehalogeniden mit Aminoanthrachinonen in inerten hochsiedenden organischen Flüssigkeiten in der Wärme in sehr guten Ausbeuten und hoher Reinheit erhält, wenn man die Umsetzung in Benzoesäuremethylester als Reaktionsmedium bei Temperaturen im Bereich von 80 bis 180°C durchführt.

Nach dem Verfahren erhält man die Acylamine in sehr guten Ausbeuten und hoher Reinheit.

Es war überraschend, daß solche Reaktionen in Benzoesäuremethylester durchgeführt werden können. Aus der Literatur ist bekannt, daß Benzoesäuremethylester mit anorganischen Säurehalogeniden, z.B. Phosphorpentachlorid, reagiert, wobei Benzoylchlorid gebildet wird (B. 40, 751).

Weiterhin ist aus J. pr. (2), 39, 173, 178 bekannt, daß Benzoesäureethylester durch Chlorwasserstoff gespalten wird, wobei Benzoesäure und Ethylchlorid entsteht. Da bei der Herstellung der Carbonsäurechloride mit Thionylchlorid und bei der Umsetzung der Säurehalogenide mit der Aminoverbindung Chlorwasserstoff entsteht, hätte man erwarten müssen, daß auch bei Verwendung von Benzoesäuremethylester als Lösungsmittel eine Esterspaltung eintreten würde.

Benzhoesäuremethylester ist biologisch sehr gut abbaubar (Eliminierung > 98%) und toxikologisch unbedenklich. Da der Ester durch Natronlauge rasch verseift wird, läßt sich die Reinigung der Abluft problemlos durch nachgeschaltete Wäschen mit verdünnter Natronlauge durchführen.

Das Verfahren wird in der Regel so durchgeführt, daß man die Anthrachinoncarbonsäure in Benzoesäuremethylester suspendiert bzw. löst und diese durch Zugeben von Thionylchlorid in Gegenwart eines tertiären Amins, z.B. Chinolin, Pyridin oder Triethylamin bei Temperaturen bis 95°C in das Säurechlorid überführt. Nach dem Zugeben der Aminoanthrachinonverbindung wird die Temperatur auf 145°C gesteigert, wobei die Kondensation eintritt. Vorzugsweise arbeitet man nach der folgenden Variante des Verfahrens : bei der die Herstellung des Säurechlorids in Gegenwart der Aminoanthrachinonverbindung erfolgt.

Das Verfahrensprodukt wird in üblicher Weise isoliert, z.B. durch Absaugen. Das Filtergut wird zunächst mit dem Benzoesäureester, dann mit einer mit Wasser mischbaren organischen Flüssigkeit, z.B. Methanol, und zuletzt mit Wasser gewaschen.

Aus den Mutterlaugen läßt sich der Benzoesäuremethylester z.B. durch Destillation im Vakuum zu über 95% regenerieren. Ein weiterer Vorteil des erfindungsgemäßen Verfahrens besteht darin, daß im Vergleich zu Nitrobenzol und Dichlorbenzol die Umsetzung bei wesentlich höherer Konzentration der Reaktionspartner erfolgen kann.

Vorteilhafterweise wird das Reaktionsgemisch direkt nach der Beendigung der Umsetzung im Vakuum zur Trockene eingedampft, wobei der Ester zurückgewonnen wird.

Das als Rückstand erhaltene Acylamin kann direkt zum Farbstoff weiterverarbeitet werden.

Als Anthrachinoncarbonsäurehalogenide kommen z.B. solche in Betracht, die sich von der 1-Aminoanthrachinon-2-carbonsäure und 1,9-Anthrapyrimidin-4-carbonsäure (1,9-Pyrimidinoanthron-10-2-carbonsäure) ableiten.

Als Aminoanthrachinone sind im einzelnen z.B. zu nennen : 1- und 2-Aminoanthrachinon, 2-Amino-3-bromanthrachinon, 2-Amino-3-hydroxyanthrachinon, 1,4- und 1,5-Diaminoanthrachinon, 1-Amino-4- und 1-Amino-5-benzoylaminoanthrachinon.

Die Erfindung soll durch die folgenden Beispiele zusätzlich erläutert werden. Die Teile sind Gewichtsteile und die Prozente beziehen sich auf das Gewicht.

Beispiel 1

In 350 Teilen Benzoesäuremethylester, der zuvor unter Durchleiten von Stickstoff bei 140°C entwässert wurde, werden bei Raumtemperatur 48,4 Teile 1-Amino-anthrachinon-2-carbonsäure, 56 Teile 2-Amino-3-bromanthrachinon und 5 Teile Chinolin eingetragen. Dann werden 26 Teile Thionylchlorid zugegeben, das Gemisch in einer Stunde auf 95°C aufgeheizt und dann 1 Stunde bei 95°C gehalten. Danach wird in einer Stunde auf 105°C geheizt, nach einer Stunde bei 105°C wird in einer Stunde auf 145°C geheizt und das Gemisch 3 Stunden bei dieser Temperatur gehalten. Dann wird das Reaktionsgemisch auf 110°C gekühlt und bei dieser Temperatur filtriert. Das Filtergut wird zuerst mit Benzoesäuremethylester, dann mit Methanol und schließlich mit Wasser gewaschen. Nach Trocknen erhält man 91 Teile des entsprechenden Amids. Die Gehaltsbestimmung erfolgt durch Umsetzen zu C.I. Vat Red 10 nach den in der DE-A 2 259 329, Beispiel 5 beschriebenen Verfahren.
Gehalt : 98,0%
Ausbeute ber. 100% = 89,2 Teile = 89,3% d.Th.
Die Färbung ist 5-10% farbstärker und im Farbton deutlich reiner als die des Farbstoffs des Standes der Technik.

Beispiel 2

In 400 Teile Benzoesäuremethylester (entwässert wie in Beispiel 1) werden bei Raumtemperatur 40 Teile 1-Amino-4-nitro-anthrachinon-2-carbonsäure, 36 Teile 2-Amino-3-bromanthrachinon und 3,4 Teile Pyridin eingetragen. Nach dem Zugeben von 25 Teilen Thionylchlorid wird in einer halben Stunde auf 95°C aufgeheizt. Nach einer Stunde bei 95°C wird in einer Stunde auf 105°C geheizt und eine bei 105°C gehalten. Dann wird in einer Stunde auf 145°C geheizt und 2 Stunden bei 145°C gehalten. Nach dem Abkühlen auf 80°C wird filtriert und das Filtergut zuerst mit Benzoesäuremethylester, dann mit Methanol und schließlich mit Wasser gewaschen.

Nach Trocknen erhält man 64,8 Teile des entsprechenden Amids.

Die Gehaltsbestimmung erfolgt durch Säulenchromatografie :
Gehalt : 97%.
Ausbeute ber. 100% = 62,9 Teile = 82,3% d. Th.

Beispiel 3

In 250 Teile Benzoesäuremethylester (entwässert wie in Beisp. 1) werden bei Raumtemperatur 20 Teile 1-Amino-anthrachinon-2-carbonsäure, 0,2 Teile Pyridin und 11 Teile Thionylchlorid gegeben. Dann wird in 1 Stunde auf 105°C aufgeheizt und 1 Stunde gehalten. Dann läßt man auf 70°C abkühlen und gibt 8 Teile 1,4 Diaminoanthrachinon zu. Dann wird in 3 Stunden auf 145°C aufgeheizt und 2 Stunden bei dieser Temperatur gehalten. Nach dem Abkühlen auf 80°C wird abgesaugt. Das Filtergut wird zunächst mit Methanol, dann mit Wasser gewaschen und getrocknet.

Ausbeute : 24 Teile C.I. Vat. Red 21 ; C.I. Nr. 61670 (96,7% d. Th.). Der erhaltene Farbstoff entspricht in seinen coloristischen Eigenschaften dem Farbstoff des Standes der Technik (Umsetzen von 1-Nitro-anthrachinon-2-carbonsäurechlorid mit 1,4-Diaminoanthrachinon und weitere Reaktion mit Ammoniak).

Beispiel 4

In 250 Teile Benzoesäuremethylester (entwässert wie in Beisp. 1) werden bei Raumtemperatur 20 Teile 1-Nitro-anthrachinon-2-carbonsäure, 2 Teile Triethylamin und 12 Teile Thionylchlorid gegeben. Dann wird in 1 Stunde auf 105°C aufgeheizt und 1 Stunde bei 105°C gehalten. Nach dem Abkühlen auf 80°C werden bei dieser Temperatur 8 Teile 1,4-Diaminoanthrachinon zugegeben und in 3 Stunden auf 145°C aufgeheizt und das Gemisch 2 Stunden bei 145°C gehalten.

Das Reaktionsgemisch wird dann auf 180°C erwärmt und im Verlauf von 6 Stunden 10 Teile Ammoniakgas eingeleitet. Nach dem Kühlen auf 80°C wird abgesaugt, das Filtergut mit Methanol, dann mit Wasser gewaschen und getrocknet.

Man erhält 23,4 Teile C.I. Vat Red 21 ; C.I. Nr. 61670 (94,4% d. Th.), das in seinem coloristischen Eigenschaften dem Farbstoff des Standes der Technik entspricht.

Beispiel 5

Es wird wie in Beispiel 1 gearbeitet, jedoch anstelle von 1-Aminoanthrachinon-2-carbonsäure die äquivalente Menge 1-Nitroanthrachinoncarbonsäure angewendet.

Man erhält das entsprechende Carbonsäureamid in einer Ausbeute von 90% d.Th. mit einem Reingehalt von 98%.

Beispiel 6

126 Teile 1,9-Anthrapyrimidin-4-carbonsäure und 101 Teile 1-Aminoanthrachinon wurden zu in 3432 Teile Benzoesäuremethylester eingetragen, das Gemisch in 1 Std. auf 130°C erwärmt und 1 Std. bei 130°C gehalten. Nachdem Abkühlen auf 30°C wurden 126 Teile Thionylchlorid zugegeben, das Gemisch unter Rühren in 1 Std. auf 110°C erwärmt und 2 Std. bei 110°C gerührt. Das Reaktionsgemisch wurde in 30 Min. auf 80°C gekühlt, filtriert und das Filtergut mit Benzoesäuremethylester, dann mit Methanol und zuletzt mit Wasser gewaschen und getrocknet.

Ausbeute : 216 Teile C.I. Vat Yellow 20, C.I. Nr. 68420.

Der Farbstoff entspricht in den coloristischen Eigenschaften dem Farbstoff des Standes der Technik und zwar sowohl als Küpenfarbstoff als auch bei der Anwendung als Pigment.

Beispiel 7

Es wurde wie in Beispiel 6 gearbeitet, jedoch wurden die 126 Teile Thionylchlorid bei 70°C zu der Suspension aus der Anthrapyrimidincarbonsäure und 1-Aminoanthrachinon in dem Benzoesäuremethylester gegeben und dann in 30 Min. auf 110°C erwärmt und 2 Std. bei dieser Temperatur gehalten.

Ausbeute : 211 Teile C.I. Vat Yellow 20.

Der Farbstoff hat die gleichen Eigenschaften wie der nach Beispiel 6 erhaltene.

Beispiel 8

Es wurde wie in Beispiel 1 verfahren, jedoch wurde das Reaktionsgemisch nach der Beendigung der Umsetzung im Vakuum zur Trockene eingedampft.

Der erhaltene Rückstand wurde nach dem in der DE-A-2259329, Beispiel 5 beschriebenen Verfahren zu C.I. Vat. Red. 10 umgesetzt.

Der Farbstoff wurde in gleicher Ausbeute und Reinheit wie nach Beispiel 1 erhalten.

**Patentansprüche**

1. Verfahren zur Herstellung von Acylaminen der Anthrachinonreihe durch Umsetzen von substituierten Anthrachinoncarbonsäurehalogeniden mit Aminoantrachinonen in inerten hochsiedenden organischen Flüssigkeiten in der Wärme, dadurch gekennzeichnet, daß die Umsetzung in Benzoesäuremethylester als Reaktionsmedium bei Temperaturen im Bereich von 80 bis 180°C erfolgt.

2. Verfahren gemäß Anspruch 1, dadurch gekennzeichnet, daß die Herstellung des benötigten Anthrachinoncarbonsäurehalogenids gegebenenfalls in Gegenwart des Aminoanthrachinons in Benzoesäuremethylester bei Temperaturen bis 95°C erfolgt und das Säurechlorid anschließend zum Acylamin umgesetzt wird.

**Claims**

1. A process for preparing an acylamine of the anthraquinone series by reacting a substituted anthraquinonecarbonyl halide with an aminoanthraquinone in an inert high boiling organic liquid at elevated temperature, which comprises carrying out the reaction in methyl benzoate as reaction medium at from 80 to 180°C.

2. A process as claimed in claim 1, wherein the anthraquinonecarbonyl halide required may be prepared in methyl benzoate at up to 95°C in the presence of the aminoanthraquinone and the acyl chloride is then converted into the acylamine.

**Revendications**

1. Procédé de préparation d'acylamines de la série de l'anthraquinone par réaction à la chaleur d'halogénures d'acide anthraquinone-carboxylique avec des aminoanthraquinones dans des liquides organiques inertes à haut point d'ébullition, caractérisé par le fait que la réaction s'effectue dans du benzoate de méthyle comme milieu de réaction, à des températures comprises entre 80 et 180 degrés C.

2. Procédé selon la revendication 1, caractérisé par le fait que la préparation de l'halogénure d'acide anthraquinone-carboxylique nécessaire est effectuée à des températures allant jusqu'à 95 degrés C, dans du benzoate de méthyle, éventuellement en présence de l'aminoanthraquinone et le chlorure d'acide est transformé ensuite en acylamine.